# EUROPÄISCHE PATENTSCHRIFT

(11) **EP 2 035 205 B1**
(45) Veröffentlichungstag und Bekanntmachung des Hinweises auf die Patenterteilung: **03.04.2013**
(21) Anmeldenummer: 07764917.6
(22) Anmeldetag: 28.06.2007
(51) Int. Cl.: B29C 45/14, F16C 35/04, F16C 35/06, F16H 63/30

(54) **VERFAHREN ZUR HERSTELLUNG EINER LAGERANORDNUNG UND LAGERANORDNUNG**
PROCESS FOR PRODUCTION OF A BEARING ARRANGEMENT AND BEARING ARRANGEMENT
PROCEDE DE FABRICATION D'UN ARRANGEMENT DE PALIER ET ARRANGEMENT DE PALIER

(30) Priorität: 30.06.2006 EP 06013561
(43) Veröffentlichungstag der Anmeldung: 18.03.2009
(73) Patentinhaber: AB SKF, 415 50 Göteborg (SE)
(72) Erfinder: DÜMPERT, Michael, 97464 Niederwerrn (DE); DILJE, Alexander, 97422 Schweinfurt (DE); HAUCK, Helmut, 97502 Euerbach (DE); TSCHIRSCHWITZ, Michael, 97422 Schweinfurt (DE); HELFRICH, Thomas, 97456 Dittelbrunn-Hambach (DE); SCHWARZBICH, Jörg, 33615 Bielefeld (DE)
(74) Vertreter: Kohl, Thomas
(86) Internationale Anmeldenummer: PCT/EP2007/005733
(87) Internationale Veröffentlichungsnummer: WO 2008/000473

(56) Entgegenhaltungen:
- DE-A1- 4 116 823
- DE-A1- 19 961 224
- DE-U1- 29 612 445

## Beschreibung

Die Erfindung betrifft ein Verfahren zur Herstellung einer Lageranordnung, die einen Lagerträger aufweist, der mindestens ein erstes Lager zur zumindest radialen Lagerung eines Wellenteils und mindestens ein zweites Lager zur radialen Lagerung eines stangenförmigen Bauteils aufweist. Des weiteren betrifft die Erfindung eine Lageranordnung.

Lageranordnungen dieser Art sind im Stand der Technik bekannt. Sie werden insbesondere in Getrieben eingesetzt, bei denen einerseits Getriebewellen gelagert werden müssen und die andererseits eine Lagerungsmöglichkeit für Getriebeschaltstangen aufweisen müssen.

Die gattungsbildende DE 199 61 224 A1 zeigt einen als Blechteil ausgebildeten Lagerträger, der zwei nebeneinander angeordnete Wälzlager aufnimmt. Der Lagerträger ist dabei spanlos geformt, Der Träger ist für ein Schaltgetriebe vorgesehen, das auch Schaltwellen umfasst. Um diese zu lagern, weist der Lagerträger hülsenförmige Abschnitte auf, die in ihn eingeformt sind.

Eine ähnliche Lösung ist in der DE 203 09 913 U1 offenbart. Hier ist ein plattenförmiger Lagerträger aus Blech gezeigt, der zwei angeformte Sitzflächen zur Aufnahme je eines Lagers hat. Der Lagerträger weist weiterhin zwei außerhalb der Sitzflächen ausgebildete Hülsen auf, die zum Führen bzw. Lagern von Schaltstangen vorgesehen sind.

Aus der DE 197 19 744 A1 ist weiterhin ein Lagerträger zur Aufnahme einer Lageranordnung für eine Welle bekannt, wobei hier der Lagerträger aus Kunststoff besteht. Er ist als ein mit der Lageranordnung durch Umspritzen verbundenes Spritzgießteil hergestellt.

Aus der DE 196 09 209 A1 geht eine Schaltvorrichtung für ein Zahnräderwechselgetriebe hervor, bei dem eine Schaltstange an einem Schaltgehäuse-Einsatz und an einem den Einsatz haltenden Gehäuseteil eines zweiteiligen Getriebegehäuses axial verschiebbar gelagert ist. Eine ähnliche Lösung zeigt die DE 196 09 210 C1.

Bei den vorbekannten Lösungen ist es nachteilig, dass der Herstellaufwand für die Lagerträger dann relativ hoch ist, wenn dafür Sorge getragen werden muss, dass ein aus Blech bestehender Lagerträger auch die Führungen für die Schaltstangen mit hinreichender Präzision aufweist. Bei den Lösungen, bei denen ein Lagerträger aus Kunststoff vorgesehen wird, ist es nachteilig, dass solche Lagerträger oft nicht die mechanische Festigkeit aufweisen, wie sie für einen stabilen Betrieb eines Getriebes erforderlich sind.

Hinzu kommt noch folgendes Problem: Gelegentlich ist es aus Montagegründen sehr nachteilig, wenn sowohl die zu lagernden Wellen des Getriebes als auch die Schaltstangen gleichzeitig montiert werden müssen. Hieran führt bei den vorbekannten Lösungen jedoch kein Weg vorbei, so dass die damit einher gehenden Nachteile in Kauf genommen werden müssen.

Schließlich ist es nachteilig, dass bekannte Lösungen relativ teuer sind, weil die Herstellung des Blechteils aufwändig ist. Ferner ist es bei der Verwendung eines Blechlagerträgers unvermeidbar, dass dieser ein relativ hohes Gewicht aufweist. Der Erfindung liegt daher die Aufgabe zugrunde, ein Verfahren zur Herstellung einer Lageranordnung und eine solche Lageranordnung zu schaffen, mit dem bzw. mit der es möglich ist, die obigen Nachteile zu vermeiden. Es soll also erreicht werden, dass die Herstellung des Lagerträgers in einfacherer und damit kostengünstigerer Weise erfolgen kann, als dies bislang der Fall ist, wobei dennoch für eine präzise Lagerung der zu lagernden Wellen und auch von Gestängen, insbesondere Schaltgestängen, Sorge getragen werden soll. Der Lagerträger soll dennoch eine sehr hohe mechanische Festigkeit aufweisen. Die Montage des Lagerträgers soll deutlich einfacher sein, als dies für vorbekannte Lösungen gilt; damit soll es möglich werden, die Werkzeugkosten gering zu halten. Ferner soll sich der Lagerträger durch ein geringes Gewicht auszeichnen.

Die Lösung dieser Aufgabe durch die Erfindung ist verfahrensgemäß durch die folgenden Schritte gekennzeichnet:
a) Herstellen eines Kunststoff-Trägerteils mittels Spritzgießen, wobei mehrere Linearlager-Laufbahnen des zweiten Lagers durch den Spritzgießvorgang in-situ oder durch einen sich an das Spritzgießen anschließenden Verbindungsprozess mit dem Kunststoff-Trägerteil verbunden werden;
b) Herstellen des Lagerträgers aus eigensteifem Material, wobei in den Lagerträger eine zur Aufnahme des Kunststoff-Trägerteils vorgesehene Aufnahme ausgebildet wird und wobei mindestens eine Aufnahme für einen Lagerring des ersten Lagers ausgebildet wird;
c) Platzieren und Fixieren des Kunststoff-Trägerteils in der vorgesehenen Aufnahme des Lagerträgers.

Die Erfindung stellt also darauf ab, dass in einem ersten Prozessschritt zunächst ein Kunststoff-Trägerteil vorgefertigt wird, in dem sofort in-situ beim Spritzgießen oder anschließend an das Spritzgießen eine Anzahl Linearlager-Laufbahnen für das stangenförmige Bauteil angeordnet und befestigt werden. Die Linearlager-Laufbahnen werden im Falle des in-situ-Anformens direkt beim Spritzgießen durch Umspritzen der Laufbahnen angebracht. Bei dem zweiten Lager handelt es sich bevorzugt um das Schaltgestänge-Lager bzw. um die Schaltgestänge-Führung in einem Schaltgetriebe. Vorher, gleichzeitig oder anschließend wird vorzugsweise aus Blech der Lagerträger gefertigt, der zur Aufnahme des mindestens einen Lagers zur Lagerung des Wellenteils, insbesondere einer Getriebewelle, ausgestattet wird, wozu hier die Aufnahme für den Lagerring des ersten Lagers ausgebildet wird. Schließlich wird das Kunststoff-Trägerteil samt dem mindestens einen Lagerring des zweiten Lagers (für die Schaltstangenlagerung) in einer speziell hierfür vorgesehenen Ausnehmung bzw. Aufnahme im Lagerträger positioniert und fixiert.

Eine erste Fortbildung sieht vor, dass beim Spritzgießen des Kunststoff-Trägerteils gemäß obigem Schritt a) die Linearlager-Laufbahnen des zweiten Lagers mindestens einseitig axial umspritzt werden, um einen axialen Umgriff der Linearlager-Laufbahn zu schaffen. Bevorzugt werden die Linearlager-Laufbahnen beidseitig axial umspritzt.

Beim Spritzgießen des Kunststoff-Trägerteils gemäß obigem Schritt a) wird das Kunststoff-Trägerteil bevorzugt mit mindestens einem Verbindungsabschnitt versehen.

Weiterhin ist bevorzugt vorgesehen, dass beim Herstellen des Lagerträgers gemäß obigem Schritt b) ein ebenes Blechteil durch Umformen, insbesondere durch Stanzen, Pressen und/oder Tiefziehen, zu dem Lagerträger ausgebildet wird.

Das Fixieren des Kunststoff-Trägerteils in der Aufnahme des Lagerträgers gemäß obigem Schritt c) kann nach einer bevorzugten Ausgestaltung mittels Anschrauben oder Annieten erfolgen, wobei aber auch andere Verbindungstechnologien eingesetzt werden können.

Die Lageranordnung, die einen Lagerträger aufweist, der mindestens ein erstes Lager zur zumindest radialen Lagerung eines Wellenteils und mindestens ein zweites Lager zur radialen Lagerung eines stangenförmigen Bauteils hat, ist erfindungsgemäß dadurch gekennzeichnet, dass der Lagerträger aus einem Teil aus eigensteifem Material besteht und eine zur Aufnahme eines Kunststoff-Trägerteils vorgesehene Aufnahme und mindestens eine Aufnahme für einen Lagerring des ersten Lagers aufweist, wobei in die Aufnahme das Kunststoff-Trägerteil eingesetzt ist, wobei das Kunststoff-Trägerteil mehrere Linearlager-Laufbahnen des zweiten Lagers aufweist, die mit dem Kunststoff-Trägerteil verbunden sind, und wobei das Kunststoff-Trägerteil am Lagerträger fixiert ist.

Die Linearlager-Laufbahnen sind nach einer Ausgestaltung dabei am Kunststoff-Trägerteil beim Spritzgießen des Kunststoff-Trägerteils in-situ mit dem Kunststoff-Trägerteil verbunden. Hierbei ist bevorzugt vorgesehen, dass das Kunststoff-Trägerteil die Linearlager-Laufbahnen des zweiten Lagers mindestens einseitig axial mittels eines axialen Umgriffs umgreift, wobei der axiale Umgriff bevorzugt beidseitig vorgesehen ist.

Es ist aber nicht zwingend, dass die Festlegung der Linearlager-Laufbahnen am Kunststoff-Trägerteil durch in-situ-Umspritzen erfolgen musst. Vielmehr sieht eine alternative Weiterbildung vor, dass die Linearlager-Laufbahnen in beim Spritzgießen des Kunststoff-Trägerteils geformte Aufnahmen eingepresst sind und sich in diesen Aufnahmen mit Presspassung befinden.

Eine weitere alternative und auch kostengünstige Möglichkeit besteht darin, dass die Linearlager-Laufbahnen mit dem Kunststoff-Trägerteil mittels einer Schnappoder Clipverbindung verbunden sind.

Weiter alternativ kann eine Klebeverbindung oder eine Schweiß- oder Lötverbindung vorgesehen werden.

Das Kunststoff-Trägerteil kann mindestens einen Verbindungsabschnitt aufweisen, mit dem das Kunststoff-Trägerteil am Lagerträger fixiert ist.

Bevorzugt besteht der Lagerträger aus einem ebenen Blechteil, das durch Umformen, insbesondere durch Stanzen, Pressen und/oder Tiefziehen, zu dem Lagerträger ausgebildet wird.

Das Kunststoff-Trägerteil kann in der Aufnahme des Lagerträgers mittels einer Schraubverbindung oder durch eine Nietverbindung, aber auch durch eine andere Befestigungstechnologie festgelegt sein.

Vorzugsweise ist das erste Lager ein Wälzlager. Häufig werden zwei erste Lager - nebeneinander im Lagerträger angeordnet - vorgesehen werden, wobei deren Drehachsen parallel zueinander ausgerichtet sind. Dieser Anwendungsfall liegt insbesondere vor, wenn zwei parallele Getriebewellen relativ eng beieinander gelagert werden müssen.

Das zweite Lager ist vorzugsweise ein Linear-Wälzlager. Das zweite Lager kann mindestens drei über den Umfang verteilt angeordnete Linearlager-Laufbahnen aufweisen. Bevorzugt sind dabei genau drei äquidistant um den Umfang verteilt angeordnete Linearlager-Laufbahnen vorgesehen. Es könne auch vier, fünf, oder sechs Laufbahnen angeordnet werden, um die Lagerung stabiler zu gestalten. Alle Linearlager-Laufbahnen sind als vorzugsweise geschliffene Stahlstäbe ausgebildet, deren Längsachse (Linearverschiebe-Achse) sich normal zur Ebene des Lagerträgers erstreckt.

Zwischen jeder Linearlager-Laufbahn und dem stangenförmigen Bauteil kann ein in einem Käfig angeordneter Rollensatz, insbesondere ein Kugelsatz, angeordnet werden.

Der Lagerträger kann im Bereich der Aufnahme für den Lagerring des ersten Lagers in eine Ringnut im Außenumfang des Lagerrings des ersten Lagers eingreifen. Der Lagerträger kann weiterhin im Bereich der Aufnahme für den Lagerring des ersten Lagers topfförmig ausgebildet sein und einen Sitzabschnitt für den Außenumfang des Lagerrings des ersten Lagers bilden.

Mit Vorteil weist der Lagerträger eine Anzahl Befestigungselemente auf. Diese können als Bohrungen zum Durchtritt einer Schraube ausgebildet sein. Es kann sich auch um mit einem Gewinde versehene Bohrungen zum Zusammenwirken mit einer Schraube handeln.

Der Lagerträger kann - zwecks Versteifung - im Bereich der Befestigungselemente eine Verbreiterung in Achsrichtung des mindestens einen ersten Lagers aufweisen. Vorzugsweise besteht der Lagerträger aus gehärtetem Stahl.

Bevorzugt ist das Wellenteil, das mittels der Lageranordnung gelagert wird, Bestandteil einer Getriebewelle, insbesondere eines Kfz-Getriebes. Das stangenförmige Bauteil ist bevorzugt die Schaltstange eines Getriebes, insbesondere eines Kfz-Getriebes.

Mit dem Erfindungsvorschlag kann die Montage eines Getriebes in völlig neuer Weise erfolgen, da es nicht notwendig ist, die Getriebewellen und die Schaltgestänge gleichzeitig montieren zu müssen. Die Schaltgestänge können beispielsweise - vormontiert mit dem Kunststoff-Trägerteil - an den Lagerträger hinzugefügt werden, wenn die Getriebewellen mittels des Lagerträgers bereits vollständig montiert sind.

Ferner zeichnet sich der so hergestellte Lagerträger durch ein geringes Gewicht aus, da für die von der Kraftbeaufschlagung her gesehen untergeordneten Lagerung des Schaltgestänges ein Kunststoffteil zum Einsatz kommen kann.

Schließlich kann durch dieses Vorgehen auch eine hohe Lagerpräzision erreicht werden, da sowohl das Kunststoff-Trägerteil als auch die Aussparung im Lagerträger in einfacher Weise mit hoher Präzision kostengünstig hergestellt werden können. Beim Umspritzen der Lagerringe des zweiten Lagers kann eine sehr hohe Präzision bei geringen Kosten erzielt werden. Weiterhin ist der Werkzeugaufwand bei der Fertigung des Lagerträgers geringer als bei vorbekannten Lösungen; es werden Mehrfachwerkzeuge möglich.

Der Erfindungsvorschlag stellt also eine Alternative zum vorbekannten rein metallischen Lagerträger (entweder spanend oder mit erheblichem Werkzeugaufwand spanlos hergestellt) dar, der kostengünstiger ist, mit erheblich weniger Werkzeugaufwand und damit geringeren Werkzeugkosten gefertigt werden kann und wesentlich leichter ist. Die Vormontagemöglichkeit vereinfacht und verbilligt den Montageprozess erheblich.

Durch die spezifische Ausgestaltung des Lagers für das stangenförmige Bauteil (Schaltstange) mit Linearlager-Laufbahnen ist kein separates Einpressen des Außenringes eines klassischen Wälzlagers mehr erforderlich. Die dem Außenring entsprechende Lagerung ist auf das Wesentliche reduziert, nämlich auf einige über den Umfang der Stange verteilt angeordnete "Streifen", so dass einfachere Fertigungsprozesse einsatzfähig werden.

Da das Linearlager, das durch die Linearlager-Laufbahnen gebildet wird, keine Drehbewegung ausführen kann und diese auch nicht erforderlich ist, ist eine ringförmige Ausbildung des Außenrings nicht nötig.

Die vorgeschlagene Lageranordnung kommt bevorzugt in Pkw-Getrieben zum Einsatz. Grundsätzlich geeignet ist sie jedoch für alle Anwendungen, bei denen das Lager mit einem Lagerträger verbunden als Einheit eingesetzt wird.

In der Zeichnung ist ein Ausführungsbeispiel der Erfindung dargestellt. Es zeigen:
- Figur 1: den Schnitt durch das Kunststoff-Trägerteil der Lageranordnung (Schnitt A-B gemäß Fig. 3) mit zwei Schaltstangen,
- Figur 2: den Lagerträger der Lageranordnung ohne angebrachtes Kunststoff-Trägerteil in der Draufsicht und
- Figur 3: den fertig montierten Lagerträger in der Draufsicht.

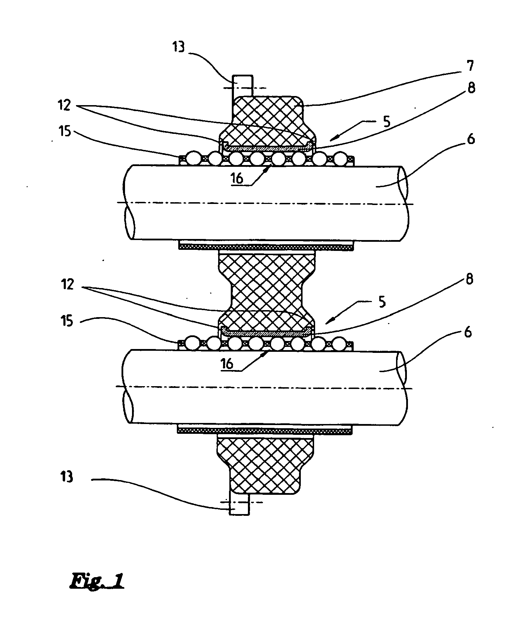

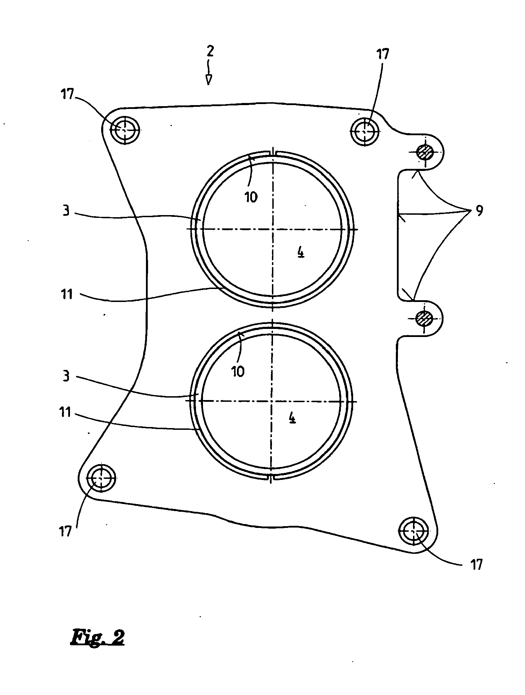

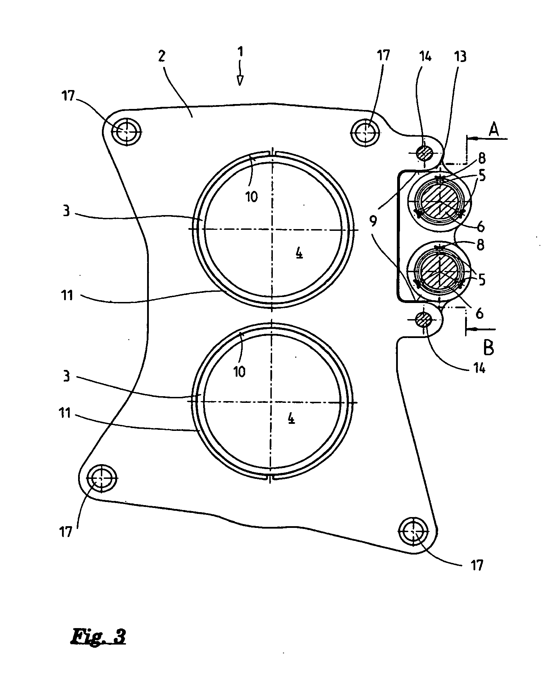

In den Figuren 1 und 2 sind die beiden wesentlichen Bestandteile skizziert, die zu der Lageranordnung 1 zusammengefügt werden, wie sie in Fig. 3 gezeigt ist.

In Fig. 1 ist ein Spritzgießformteil dargestellt, das im wesentlichen aus einem Kunststoff-Trägerteil 7 besteht. Dieses ist im klassischen Spritzgießprozess gefertigt worden, wobei ein bekanntes Kunststoffmaterial zum Einsatz kommt. Dabei kann es sich sowohl um einen Thermoplast als auch um einen Duroplast handeln, wobei die Materialwahl in Abhängigkeit des späteren Anwendungsfalls der Lageranordnung erfolgt.

Bei der vorliegenden Ausgestaltung der Erfindung ist vorgesehen, dass beim Spritzgießen des Kunststoff-Trägerteils 7 Linearlager-Laufbahnen 8 eines zweiten Lagers 5 per Umspritzen mit dem Trägerteil 7 fest verbunden werden. Dabei werden beidseitig der Linearlager-Laufbahnen 8 axiale Umgriffe 12 mit angespritzt, so dass die als Schienen ausgebildeten Linearlager-Laufbahnen 8 relativ zum Trägerteil 7 radial und axial festgelegt sind.

Die beiden zweiten Lager 5 dienen zur Lagerung bzw. Führung zweier Schaltstangen eines Pkw-Handschaltgetriebes. Die Schaltstangen sind als stangenförmige Bauteile in den Figuren 1 und 3 mit der Bezugsziffer 6 markiert.

Ferner weist das Trägerteil 7 Verbindungsabschnitte 13 auf, die als flächige Fortsetzungen des Trägerteil-Grundkörpers ausgebildet sind und Bohrungen aufweisen, mittels derer sie später am in Fig. 2 skizzierten Lagerträger 2 festgelegt werden können. Das Trägerteil 7 weist dabei in der Draufsicht eine im wesentlichen viereckige, blockförmige Ausgestaltung auf, wie es in Fig. 3 gesehen werden kann.

Der aus einem ebenen Blechteil spanlos gefertigte Lagerträger 2 ist in Fig. 2 zu sehen. Wichtiger Bestandteil des Lagerträgers 2 sind einmal die kreisförmigen Aufnahmen 10 für die Lageraußenringe 11 zweier erster Lager 3, die zur Lagerung zweier parallel nebeneinander angeordneter Wellenteile 4 in Form von Getriebewellen vorgesehen sind. Ein weiterer wichtiger Bestandteil des Lagerträgers 2 ist eine Aufnahme bzw. Ausnehmung 9 im Lagerträger 2, die zur Aufnahme des Kunststoff-Trägerteils 7 ausgebildet ist. Die Ausnehmung 9 weist daher eine zur Form des Trägerteils 7 korrespondierende Form auf.

Damit der Lagerträger 2 an einem Bauteil, namentlich an einem Getriebegehäuse, festgelegt werden kann, sind Befestigungselemente 17 vorgesehen, mit denen der Lagerträger 2 am Getriebegehäuse beispielsweise festgeschraubt werden kann.

Wie in Fig. 3 gesehen werden kann, wird das Kunststoff-Trägerteil 7 nach dem passgenauen Einsetzen in die Aufnahme bzw. Aussparung 9 im Lagerträger 2 mittels der Verbindungsabschnitte 13 und einer nur schematisch angedeuteten Schraubverbindung 14 am Lagerträger 2 fixiert. Es ist dabei möglich, dass schon vor dem Festlegen des Kunststoff-Trägerteils 7 am Lagerträger 2 die Schaltstangen 6 in das Trägerteil 7 vormontiert werden, dass es sich hierbei also um eine vormontierte Einheit handelt, was montagetechnisch sehr vorteilhaft ist. Es kann dann ein separater Einpressvorgang der Linearlager-Laufbahnen 8 des zweiten Lagers 5 entfallen.

Wie in der Zusammenschau der Figuren 1 und 3 gesehen werden kann, werden die Stangen 6 dadurch gelagert, dass zwischen sie und den Linearlager-Laufbahnen 8 Kugelsätze 16 eingebracht werden, wobei die einzelnen Kugeln des Kugelsatzes 16 von einem Linearkäfig 15 in an sich bekannte Weise gehalten werden. In diesem Falle fungieren die Stangen 6 also selber als Laufbahn für die Kugeln des Kugelsatzes 16.

Die Festlegung des Kunststoff-Trägerteils 7 erfolgt im Ausführungsbeispiel mittels Anschrauben. Es kann hier jedoch jede beliebige form-, kraft- oder stoffschlüssige Verbindung vorgesehen werden.

### Bezugszeichenliste

- 1: Lageranordnung
- 2: Lagerträger
- 3: erstes Lager
- 4: Wellenteil
- 5: zweites Lager
- 6: stangenförmiges Bauteil
- 7: Kunststoff-Trägerteil
- 8: Linearlager-Laufbahn
- 9: Aufnahme / Aussparung
- 10: Aufnahme
- 11: Lagerring des ersten Lagers
- 12: axialer Umgriff
- 13: Verbindungsabschnitt
- 14: Schraubverbindung
- 15: Käfig
- 16: Rollensatz (Kugelsatz)
- 17: Befestigungselement

## Patentansprüche

1. Verfahren zur Herstellung einer Lageranordnung (1), die einen Lagerträger (2) aufweist, der mindestens ein erstes Lager (3) zur zumindest radialen Lagerung eines Wellenteils (4) und mindestens ein zweites Lager (5) zur radialen Lagerung eines stangenförmigen Bauteils (6) aufweist, **gekennzeichnet durch** die folgenden Verfahrensschritte:
a) Herstellen eines Kunststoff-Trägerteils (7) mittels Spritzgießen, wobei mehrere Linearlager-Laufbahnen (8) des zweiten Lagers (5) **durch** den Spritzgießvorgang in-situ oder **durch** einen sich an das Spritzgießen anschließenden Verbindungsprozess mit dem Kunststoff-Trägerteil (7) verbunden werden;
b) Herstellen des Lagerträgers (2) aus eigensteifem Material, wobei in den Lagerträger (2) eine zur Aufnahme des Kunststoff-Trägerteils (7) vorgesehene Aufnahme (9) ausgebildet wird und wobei mindestens eine Aufnahme (10) für einen Lagerring (11) des ersten Lagers (3) ausgebildet wird;
c) Platzieren und Fixieren des Kunststoff-Trägerteils (7) in der vorgesehenen Aufnahme (9) des Lagerträgers (2).

2. Verfahren nach Anspruch 1, **dadurch gekennzeichnet, dass** beim Spritzgießen des Kunststoff-Trägerteils (7) gemäß Schritt a) nach Anspruch 1 die Linearlager-Laufbahnen (8) des zweiten Lagers (5) mindestens einseitig axial umspritzt werden, um einen axialen Umgriff (12) der Linearlager-Laufbahn (8) zu schaffen.

3. Verfahren nach Anspruch 2, **dadurch gekennzeichnet, dass** beim Spritzgießen des Kunststoff-Trägerteils (7) die Linearlager-Laufbahnen (8) des zweiten Lagers (5) beidseitig axial umspritzt werden.

4. Verfahren nach einem der Ansprüche 1 bis 3, **dadurch gekennzeichnet, dass** beim Spritzgießen des Kunststoff-Trägerteils (7) gemäß Schritt a) nach Anspruch 1 das Kunststoff-Trägerteil (7) mit mindestens einem Verbindungsabschnitt (13) versehen wird.

5. Verfahren nach einem der Ansprüche 1 bis 4, **dadurch gekennzeichnet, dass** beim Herstellen des Lagerträgers (2) gemäß Schritt b) nach Anspruch 1 ein ebenes Blechteil durch Umformen, insbesondere durch Stanzen, Pressen und/oder Tiefziehen, zu dem Lagerträger (2) ausgebildet wird.

6. Verfahren nach einem der Ansprüche 1 bis 5, **dadurch gekennzeichnet, dass** das Fixieren des Kunststoff-Trägerteils (7) in der Aufnahme (9) des Lagerträgers (2) gemäß Schritt c) nach Anspruch 1 mittels Anschrauben oder Vernieten erfolgt.

7. Lageranordnung (1), die einen Lagerträger (2) aufweist, der mindestens ein erstes Lager (3) zur zumindest radialen Lagerung eines Wellenteils (4) und mindestens ein zweites Lager (5) zur radialen Lagerung eines stangenförmigen Bauteils (6) hat, **dadurch gekennzeichnet, dass** der Lagerträger (2) aus einem Teil aus eigensteifem Material besteht und eine zur Aufnahme eines Kunststoff-Trägerteils (7) vorgesehene Aufnahme (9) und mindestens eine Aufnahme (10) für einen Lagerring (11) des ersten Lagers (3) aufweist, wobei in die Aufnahme (9) das Kunststoff-Trägerteil (7) eingesetzt ist, wobei das Kunststoff-Trägerteil (7) mehrere Linearlager-Laufbahnen (8) des zweiten Lagers (5) aufweist, die mit dem Kunststoff-Trägerteil (7) verbunden sind, und wobei das Kunststoff-Trägerteil (7) am Lagerträger (2) fixiert ist.

8. Lageranordnung nach Anspruch 7, **dadurch gekennzeichnet, dass** die Linearlager-Laufbahnen (8) am Kunststoff-Trägerteil (7) beim Spritzgießen des Kunststoff-Trägerteils (7) in-situ mit dem Kunststoff-Trägerteil (7) verbunden sind.

9. Lageranordnung nach Anspruch 8, **dadurch gekennzeichnet, dass** das Kunststoff-Trägerteil (7) die Linearlager-Laufbahnen (8) des zweiten Lagers (5) mindestens einseitig, vorzugsweise beidseitig, axial mittels eines axialen Umgriffs (12) umgreift.

10. Lageranordnung nach Anspruch 7, **dadurch gekennzeichnet, dass** die Linearlager-Laufbahnen (8) in beim Spritzgießen des Kunststoff-Trägerteils (7) geformte Aufnahmen eingepresst sind und sich in diesen Aufnahmen mit Presspassung befinden.

11. Lageranordnung nach Anspruch 7, **dadurch gekennzeichnet, dass** die Linearlager-Laufbahnen (8) mit dem Kunststoff-Trägerteil (7) mittels einer Schnappoder Clipverbindung, mittels einer Klebeverbindung oder mittels einer Schweiß- oder Lötverbindung verbunden sind.

12. Lageranordnung nach einem der Ansprüche 7 bis 11, **dadurch gekennzeichnet, dass** das Kunststoff-Trägerteil (7) in der Aufnahme (9) des Lagerträgers (2) mittels einer Schraubverbindung (14) oder mittels einer Nietverbindung festgelegt ist.

13. Lageranordnung nach einem der Ansprüche 7 bis 12, **dadurch gekennzeichnet, dass** das zweite Lager (5) ein Linear-Wälzlager ist.

14. Lageranordnung nach Anspruch 13, **dadurch gekennzeichnet, dass** das zweite Lager (5) mindestens drei über den Umfang verteilt angeordnete Linearlager-Laufbahnen (8) aufweist.

15. Lagerträger nach einem der Ansprüche 7 bis 14, **dadurch gekennzeichnet, dass** das stangenförmige Bauteil (6) die Schaltstange eines Getriebes, insbesondere eines Kfz-Getriebes, ist.

## Claims

1. Method for producing a bearing arrangement (1) which has a bearing carrier (2) which has at least one first bearing (3) for the at least radial mounting of a shaft part (4) and at least one second bearing (5) for the radial mounting of a rod-shaped component (6), **characterized by** the following method steps:
a) production of a plastic carrier part (7) by means of injection moulding, a plurality of linear-bearing raceways (8) of the second bearing (5) being connected to the plastic carrier part (7) by the in-situ injection moulding operation or by a connecting process which follows the injection moulding;
b) production of the bearing carrier (2) from inherently rigid material, a receptacle (9) which is provided for receiving the plastic carrier part (7) being formed into the bearing carrier (2), and at least one receptacle (10) being formed for a bearing ring (11) of the first bearing (3);
c) positioning and fixing of the plastic carrier part (7) in the provided receptacle (9) of the bearing carrier (2).

2. Method according to Claim 1, **characterized in that**, during the injection moulding of the plastic carrier part (7) in accordance with step a) according to Claim 1, the linear-bearing raceways (8) of the second bearing (5) are encapsulated axially by injection moulding at least on one side, in order to provide an axial wrap-around (12) of the linear-bearing raceway (8).

3. Method according to Claim 2, **characterized in that**, during the injection moulding of the plastic carrier part (7), the linear-bearing raceways (8) of the second bearing (5) are encapsulated axially by injection moulding on both sides.

4. Method according to one of Claims 1 to 3, **characterized in that**, during the injection moulding of the plastic carrier part (7) in accordance with step (a) according to Claim 1, the plastic carrier part (7) is provided with at least one connecting section (13).

5. Method according to one of Claims 1 to 4, **characterized in that**, during the production of the bearing carrier (2) in accordance with step b) according to Claim 1, a flat sheet-metal part is configured to produce the bearing carrier (2) by forming, in particular by stamping, pressing and/or deep drawing.

6. Method according to one of Claims 1 to 5, **characterized in that** the plastic carrier part (7) is fixed in the receptacle (9) of the bearing carrier (2) in accordance with step c) according to Claim 1 by means of screwing or riveting.

7. Bearing arrangement (1) which has a bearing carrier (2) which has at least one first bearing (3) for the at least radial mounting of a shaft part (4) and at least one second bearing (5) for the radial mounting of a rod-shaped component (6), **characterized in that** the bearing carrier (2) comprises a part made from inherently rigid material and has a receptacle (9), which is provided for receiving a plastic carrier part (7), and at least one receptacle (10) for a bearing ring (11) of the first bearing (3), the plastic carrier part (7) being inserted into the receptacle (9), the plastic carrier part (7) having a plurality of linear-bearing raceways (8) of the second bearing (5) which are connected to the plastic carrier part (7), and the plastic carrier part (7) being fixed on the bearing carrier (2).

8. Bearing arrangement according to Claim 7, **characterized in that** the linear-bearing raceways (8) on the plastic carrier part (7) are connected to the plastic carrier part (7) during the in-situ injection moulding of the plastic carrier part (7).

9. Bearing arrangement according to Claim 8, **characterized in that** the plastic carrier part (7) engages axially around the linear-bearing raceways (8) of the second bearing (5) at least on one side, preferably on both sides, by means of an axial wrap-around (12).

10. Bearing arrangement according to Claim 7, **characterized in that** the linear-bearing raceways (8) are pressed into receptacles, which are formed during the injection moulding of the plastic carrier part (7), and are located in the said receptacles with an interference fit.

11. Bearing arrangement according to Claim 7, **characterized in that** the linear-bearing raceways (8) are connected to the plastic carrier part (7) by means of a snap-in or clip connection, by means of an adhesive bond or by means of a welded or brazed connection.

12. Bearing arrangement according to one of Claims 7 to 11, **characterized in that** the plastic carrier part (7) is fixed in the receptacle (9) of the bearing carrier (2) by means of a screwed connection (14) or by means of a riveted connection.

13. Bearing arrangement according to one of Claims 7 to 12, **characterized in that** the second bearing (5) is a linear anti-friction bearing.

14. Bearing arrangement according to Claim 13, **characterized in that** the second bearing (5) has at least three linear-bearing raceways (8) which are arranged distributed over the circumference.

15. Bearing carrier according to one of Claims 7 to 14, **characterized in that** the rod-shaped component (6) is the selector rod of a gearbox, in particular of a motor-vehicle gearbox.

## Revendications

1. Procédé de fabrication d'un arrangement de palier (1), qui présente un support de palier (2), qui comporte au moins un premier palier (3) pour le support au moins radial d'une partie d'arbre (4) et au moins un deuxième palier (5) pour le support radial d'un composant en forme de barre (6), **caractérisé par** les étapes de procédé suivantes:
a) fabriquer une partie de support en matière plastique (7) par coulée par injection, dans lequel plusieurs chemins de roulement de palier linéaire (8) du deuxième palier (5) sont reliés à la partie de support en matière plastique (7) par le procédé de coulée par injection in situ ou par un procédé de liaison succédant à la coulée par injection;
b) fabriquer le support de palier (2) en un matériau intrinsèquement rigide, dans lequel on forme dans le support de palier (2) un logement (9) prévu pour recevoir la partie de support en matière plastique (7) et dans lequel on forme au moins un logement (10) pour une bague de palier (11) du premier palier (3);
c) placer et fixer la partie de support en matière plastique (7) dans le logement prévu (9) du support de palier (2).

2. Procédé selon la revendication 1, **caractérisé en ce que** l'on enrobe axialement au moins sur un côté les chemins de roulement de palier linéaire (8) du deuxième palier (5) lors de la coulée par injection de la partie de support en matière plastique (7) selon l'étape a) de la revendication 1, afin de procurer un serrage axial (12) du chemin de roulement de palier linéaire (8).

3. Procédé selon la revendication 2, **caractérisé en ce que** l'on enrobe axialement sur les deux côtés les chemins de roulement de palier linéaire (8) du deuxième palier (5) lors de la coulée par injection de la partie de support en matière plastique (7).

4. Procédé selon l'une quelconque des revendications 1 à 3, **caractérisé en ce que**, lors de la coulée par injection de la partie de support en matière plastique (7) selon l'étape a) de la revendication 1, la partie de support en matière plastique (7) est munie d'au moins une partie de liaison (13).

5. Procédé selon l'une quelconque des revendications 1 à 4, **caractérisé en ce que**, lors de la fabrication du support de palier (2) selon l'étape b) de la revendication 1, on façonne une pièce de tôle plane par déformation, en particulier par estampage, pressage et/ou emboutissage, pour former le support de palier (2).

6. Procédé selon l'une quelconque des revendications 1 à 5, **caractérisé en ce que** l'on effectue la fixation de la partie de support en matière plastique (7) dans le logement (9) du support de palier (2) selon l'étape c) de la revendication 1 au moyen d'assemblages vissés ou rivés.

7. Arrangement de palier (1), qui présente un support de palier (2), qui comporte au moins un premier palier (3) pour le support au moins radial d'une partie d'arbre (4) et au moins un deuxième palier (5) pour le support radial d'un composant en forme de barre (6), **caractérisé en ce que** le support de palier (2) se compose d'une partie en matériau intrinsèquement rigide et présente un logement (9) prévu pour recevoir une partie de support en matière plastique (7) et au moins un logement (10) pour une bague de palier (11) du premier palier (3), dans lequel la partie de support en matière plastique (7) est introduite dans le logement (9), dans lequel la partie de support en matière plastique (7) présente plusieurs chemins de roulement de palier linéaire (8) du deuxième palier (5), qui sont reliés à la partie de support en matière plastique (7), et dans lequel la partie de support en matière plastique (7) est fixée au support de palier (2).

8. Arrangement de palier selon la revendication 7, **caractérisé en ce que** les chemins de roulement de palier linéaire (8) sur la partie de support en matière plastique (7) sont reliés in situ à la partie de support en matière plastique (7) lors de la coulée par injection de la partie de support en matière plastique (7).

9. Arrangement de palier selon la revendication 8, **caractérisé en ce que** la partie de support en matière plastique (7) enserre axialement au moyen d'un serrage axial (12) les chemins de roulement de palier linéaire (8) du deuxième palier (5) au moins sur un côté, de préférence sur les deux côtés.

10. Arrangement de palier selon la revendication 7, **caractérisé en ce que** les chemins de roulement de palier linéaire (8) sont pressés dans des logements formés lors de la coulée par injection de la partie de support en matière plastique (7) et se trouvent dans ces logements avec un ajustement serré.

11. Arrangement de palier selon la revendication 7, **caractérisé en ce que** les chemins de roulement de palier linéaire (8) sont reliés à la partie de support en matière plastique (7) au moyen d'un assemblage à déclic ou à agrafes, au moyen d'un assemblage collé ou au moyen d'un assemblage soudé ou brasé.

12. Arrangement de palier selon l'une quelconque des revendications 7 à 11, **caractérisé en ce que** la partie de support en matière plastique (7) est fixée dans le logement (9) du support de palier (2) au moyen d'un assemblage vissé (14) ou au moyen d'un assemblage rivé.

13. Arrangement de palier selon l'une quelconque des revendications 7 à 12, **caractérisé en ce que** le deuxième palier (5) est un palier à rouleaux linéaire.

14. Arrangement de palier selon la revendication 13, **caractérisé en ce que** le deuxième palier (5) présente au moins trois chemins de roulement de palier linéaire (8) répartis sur la périphérie.

15. Support de palier selon l'une quelconque des revendications 7 à 14, **caractérisé en ce que** le composant en forme de barre (6) est la barre de commande d'un engrenage, en particulier de la boîte de vitesses d'un véhicule automobile.
